# EUROPÄISCHE PATENTSCHRIFT

(11) **EP 0 375 876 B1**
(45) Veröffentlichungstag und Bekanntmachung des Hinweises auf die Patenterteilung: **20.07.1994**
(21) Anmeldenummer: 89119896.2
(22) Anmeldetag: 26.10.1989
(51) Int. Cl.: A22C 17/04

(54) **Trennmaschine**
Separating apparatus
Appareil séparateur

(30) Priorität: 30.12.1988 DE 3844301
(43) Veröffentlichungstag der Anmeldung: 04.07.1990
(73) Patentinhaber: MODERNPACK HOPPE GMBH, D-51429 Bergisch Gladbach (DE)
(72) Erfinder: Hoppe, Günther, D-5060 Bergisch Gladbach 4 (DE)
(74) Vertreter: Patentanwälte Lippert, Stachow, Schmidt & Partner

(56) Entgegenhaltungen:
- DE-A- 3 516 623
- DE-B- 2 548 980
- NL-A- 6 900 308
- US-A- 3 612 128

## Beschreibung

Die Erfindung betrifft eine Trennmaschine zur Trennung von Produkten weicher und härterer Konsistenz, mit einer zylinderförmigen Trommel, die in ihrer Umfangswand Öffnungen zum Hindurchtreten des oder der Produkte weicher Konsistenz aufweist und die um ihre Achse über eine Heuervorrichtung drehbar antreibbar ist, mit einer seitlich und/oder unterhalb der Trommel angeordneten und unter Druck gegen die Trommel anliegenden elastischen Schicht, die simultan und in dem Bereich, in dem die Schicht an der Trommel anliegt, in gleicher Richtung mit dieser bewegbar ist und die mit der Trommel an der der Bewegungsrichtung entgegengesetzten Seite einen im Schnitt annähernd dreiecksförmigen Zwischenraum bildet, und mit einer Zuführungsvorrichtung zur Zuführung der Produkte in den Zwischenraum.

Derartige Maschinen werden in der Lebensmittel verarbeitenden Industrie, z.B. als Fleischentsehnungsmaschine, verwendet. Dabei wird das zu entsehnende Fleisch über die Zuführungsvorrichtung dem Zwischenraum zwischen Trommel und elastischer Schicht zugeführt. Aufgrund der Bewegung der Trommel und der elastischen Schicht wird das Fleisch in den Bereich, in dem die elastische Schicht gegen die Trommel gedrückt ist, hineingezogen und einem immer stärker werdenden Druck ausgesetzt. Dabei werden die weichen Teile des Fleisches durch die Öffnungen in der Umfangswand der Trommel hindurch ins Innere der Trommel gedrückt, während die härteren Bestandteile des Fleisches, Sehnen und Knorpel , an der äußeren Umfangsfläche der Trommel verbleiben. Die weichen, sehnen- und knorpelfreien Fleischstücke können dann mittels einer innerhalb der Trommel fest angebrachten Förderschnecke aus dieser heraus in einen Entnahmebehälter befördert werden. Davon getrennt können andererseits Sehnen und Knorpel durch einen gegen die Umfangsfläche der Trommel laufenden Abstreifer von dieser entfernt und über ein Sehnen-Transportband in einen zweiten Entnahmebehälter gegeben werden.

Zum Zwecke der Fleischentsehnung besteht die Trommel aus korrosionsfreiem Edelstahl und hat je nach Rohware und Endprodukt Bohrungen zwischen 1 und 10 mm Durchmesser. Die elastische Schicht ist bei der bekannten Maschine in Form eines hochelastischen Gummibandes ausgebildet, das über eine Preßrolle und weitere Umlenkrollen an die Trommel gedrückt wird.

Beim Betrieb einer solchen Maschine muß darauf geachtet werden, daß die Maschine nicht ohne Produkteingabe läuft. Der Trockenlauf der Maschine führt zum Verschleiß des sehr kostbaren hochelastischen Gummibandes und sollte auch aus wirtschaftlichen Gesichtspunkten (Totzeiten und unnötiger Energieverbrauch) vermieden werden.

Andererseits muß auch die im Übergabebereich zwischen Zuführungseinrichtung und Trommel vorhandene Produktmenge überwacht werden, um eine Überfüllung dieses Bereichs zu vermeiden. Eine Überfüllung kann insbesondere bei Fleischprodukten, die zu einer Brückenbildung im Zwischenraum zwischen elastischer Schicht und Trommel neigen, zu einer Verstopfung der Maschine führen. Jede Verstopfung macht eine zeitraubende Reinigung erforderlich und bewirkt eine Unterbrechung des Arbeitsflusses mit teueren Stillstandszeiten.

Die erforderliche Überwachung der Maschine wurde bisher hauptsächlich durch die Bedienungsperson vorgenommen. Dies setzt eine ständige Kontrolle der Produktzufuhr und der Produktmenge in dem Übergabebereich zwischen Zulieferungsvorrichtung und Trommel voraus. Bei unterbrochener Produktzufuhr oder zu starker Anfüllung des Übergabebereichs mußte der Antrieb der Maschine bzw. der Zuführungsvorrichtung manuell abgestellt werden. Dabei kam es häufig zu Verzögerungen mit den oben beschriebenen Nachteilen.

Zwar wurden schon mechanische Überwachungssysteme verwendet z.B wie in DE-B-25 48 980 veröffentlicht , und gemäß Oberbegriff des ersten Anspruchs. Diese haben jedoch den Nachteil, daß die zu verarbeitenden Produkte sich leicht an den mechanischen Teilen festsetzen und sie an ihrer Bewegung hindern. Aufgrund des dadurch bewirkten häufigen Ausfalls und der erforderlichen Reinigung haben sich mechanische Überwachungssysteme in der Praxis als wenig brauchbar erwiesen.

Der Erfindung liegt die Aufgabe zugrunde, eine Trennmaschine der obigen Art zu schaffen, bei der unnötiger Verschleiß der elastischen Schicht durch Trockenlauf der Maschine vermieden, die Maschine optimal ausgelastet und einer Überfüllung und Verstopfung vorgebeugt wird.

Die Aufgabe wird gemäß Patentanspruch 1 dadurch gelöst, daß eine Sender-Empfänger-Vorrichtung vorgesehen ist, wobei durch den Sender elektromagnetische oder akkustische Signale emittierbar und durch den Empfänger entweder unreflektierte Signale oder innerhalb eines bestimmten Meßabstands vom Sender reflektierte Signale registrierbar sind, der Sender und Empfänger außerhalb des Bereichs angeordnet sind, der den Zwischenraum zwischen Trommel und elastischer Schicht und dem Raum umfaßt, durch den die Produkte von der Zuführungsvorrichtung dem Zwischenraum zuführbar sind, und der Sender und Empfänger auf diesen Bereich gerichtet sind, und die Sender-Empfänger-Vorrichtung über die Steuervorrichtung mit dem Antrieb der Trommel und dem Antrieb der Zuführungsvorrichtung zusammengeschaltet ist, wobei in dem Fall, daß der Empfänger unreflektierte Signale registriert, durch die Schaltung der Antrieb der Trommel ausstellbar ist, wenn der Empfänger während einer vorgegebenen Zeit durchgehend Signale empfangen hat, und der Antrieb der Zuführungsvorrichtung ausstellbar ist, wenn der Empfänger nach einer vorgegebenen Zeit keine Signale empfangen hat, und wobei in dem Fall, daß der Empfänger reflektierte Signale registriert, durch die Schaltung der Antrieb der Trommel ausstellbar ist, wenn der Empfänger nach einer vorgegebenen Zeit kein Signal empfangen hat, und der Antrieb der Zuführungsvorrichtung ausstellbar ist, wenn der Empfänger während einer vorgegebenen Zeit durchgehend Signale empfangen hat.

Aufgrund der erfindungsgemäßen Konstruktion wird die Maschine automatisch abgestellt, wenn innerhalb einer vorbestimmten Zeit, die z.B. 10 sec. betragen kann, kein Produkt nachfließt. Die Zeitspanne wird so gewählt, daß ein Verschleiß der elastischen Schicht noch nicht zu befürchten ist, aber kurzzeitige Unterbrechungen der Produktzufuhr noch nicht zum Abstellen und Takten der Maschine führen. Andererseits wird die Zuführungsvorrichtung ausgestellt, wenn die Produktmenge in den Übergabebereich zwischen der Zuführungsvorrichtung und der Trommel über eine vorgegebene Zeit hinweg ein bestimmtes Volumen überschreitet und daher die Gefahr einer Verstopfung der Maschine besteht.

Wenn das Produkt wieder nachfließt bzw. das im Übergabebereich zwischen Zuführungsvorrichtung und Trommel gestaute Produkt verarbeitet ist, so kann durch die Steuervorrichtung auch ein automatisches Anstellen der Trommel und der Zuführungsvorrichtung vorgesehen sein. Dazu ist in dem Fall, daß der Empfänger unreflektierte Signale registriert, durch die Schaltung der Antrieb der Trommel wieder anstellbar, wenn der Empfänger nach einer vorgegebenen Zeit kein Signal empfangen hat, und der Antrieb der Zuführungsrichtung wieder anstellbar, wenn der Empfänger während einer vorgegebenen Zeit durchgehend Signale empfangen hat, und in dem Fall, daß der Empfänger reflektierte Strahlen registriert, durch die Schaltung der Antrieb der Trommel wieder anstellbar, sobald der Empfänger ein Signal empfangen hat, und der Antrieb der Zuführungsvorrichtung wieder anstellbar, wenn der Empfänger nach einer vorgegebenen Zeit kein Signal empfangen hat.

Zweckmäßigerweise sind Sender und Empfänger tief in dem zu überwachenden Bereich hineingerichtet, um Staubildungen möglichst im Anfangsstadium registrieren und durch Zurücknahme der Zulieferung verhindern zu können. Daher sind bei einer Sender-Empfänger-Vorrichtung, deren Empfänger reflektierte Signale registriert, Sender und Empfänger vorzugsweise in den Zwischenraum zwischen Trommel und elastischer Schicht gerichtet. Der vorbestimmte Meßabstand sollte dann etwa bis zur Mitte des Zwischenraums reichen, um Hintergrundreflektionen durch die Trommel oder die elastische Schicht zu vermeiden.

Die Steuerung kann zur Ein-Aus-Schaltung der Antriebe abfallsverzögerte bzw. anzugsverzögerte Zeitrelais aufweisen.

Um die Verarbeitungsgeschwindigkeit an die Produktzufuhr und umgekehrt noch besser anzupassen und damit eine optimale Auslastung der Maschine zu erreichen, kann mit der Steuervorrichtung der Antrieb der Trommel und/oder der Antrieb der Zuführungsvorrichtung in Abhängigkeit von der Frequenz der vom Empfänger registrierten Signale über einen elektrischen Drehzahlversteller oder eine mechanische Verstelleinrichtung stetig regelbar sein.

Vorzugsweise weist die Sender-Empfänger-Vorrichtung einen Infrarot-Sender und -Empfänger auf. Infrarot-Sender und -Empfänger sind in feuchter Umgebung, wie sie bei der Lebensmittelverarbeitung meistens vorhanden ist, besonders geeignet.

Das vom Sender emittierte Infrarotlicht ist vorzugsweise moduliert, um es von störendem Fremdlicht zu unterscheiden.

Die Sender-Empfänger-Vorrichtung weist vorzugsweise als Sender eine GaAs-Diode und als Empfänger eine Si-Photodiode auf.

In einer Sender-Empfänger-Vorrichtung, wobei der Empfänger in einem bestimmten Meßabstand vom Sender reflektierte Signale registriert, sind die GaAs-Diode und die Si-Photodiode zweckmäßigerweise gemeinsam in einem zylindrischen Gehäuse angeordnet und die geometrischen Strahlengänge der beiden Dioden so gegeneinander ausgerichtet, daß sie sich in dem vorgegebenen Meßabstand vor der Sender-Empfänger-Vorrichtung schneiden. Das zylindrische Gehäuse bietet Schutz vor Verschmutzung und ermöglicht den Einbau der Sender-Empfänger-Vorrichtung als vorgefertigte, kompakte Einheit. Derartige Vorrichtungen sind im Handel erhältlich.

Die als eine solche Einheit ausgebildete Sender-Empfänger-Vorrichtung wird bevorzugt in eine zylindrische Hülse eingesetzt, die von außen in den Raum reicht, durch den die Produkte von der Zuführungsvorrichtung dem Zwischenraum zwischen Trommel und elastischer Schicht zuführbar sind. Die zylindrische Hülse kann gegen die Horizontale nach unten geneigt sein, um entsprechend der Konstruktion der Maschine ein Hineinreichen des Meßstrahls in den zu überwachenden Bereich zu ermöglichen und die Stirnseite der Sender-Empfänger-Vorrichtung vor Verschmutzung zu schützen.

Um die Verschmutzungsgefahr der Sender-Empfänger-Vorrichtung noch weiter zu eliminieren, kann über der Hülse eine über diese reichende Abweiserplatte angeordnet sein.

Wenn der Zuführungsvorrichtung eine vorbereitende Maschine vorgeschaltet ist und zwischen vorbereitender Maschine und Zuführungsvorrichtung ein Übergabebereich für die vorbereiteten Produkte angeordnet ist, werden die erfindungsgemäße Sender-Empfänger-Vorrichtung und Steuervorrichtung bevorzugt auch zur Überwachung dieses Übergabebereichs eingesetzt. Dazu werden Sender und Empfänger außerhalb des Übergabebereichs angeordnet und auf diesen gerichtet und eine Steuervorrichtung verwendet, mit der die Sender-Empfänger-Vorrichtung mit dem Antrieb der Zuführungsvorrichtung und dem Antrieb der vorbereitenden Maschine zusammengeschaltet ist, wobei in dem Fall, daß der Empfänger unreflektierte Signale registriert, durch die Schaltung der Antrieb der Zuführungsvorrichtung ausstellbar ist, wenn der Empfänger während einer vorgegebenen Zeit durchgehend Signale empfangen hat, und der Antrieb der vorbereitenden Maschine ausstellbar ist, wenn der Empfänger nach einer vorgegebenen Zeit keine Signale empfangen hat, und wobei in dem Fall, daß der Empfänger reflektierte Signale registriert, durch die Schaltung der Antrieb der Zuführungsvorrichtung ausstellbar ist, wenn der Empfänger nach einer vorgegebenen Zeit kein Signal empfangen hat, und der Antrieb der vorbereitenden Maschine ausstellbar ist, wenn der Empfänger während einer vorgegebenen Zeit durchgehend Signale empfangen hat. Aufgrund dieser weiteren Ausbildung der Erfindung werden Totzeiten der Zuführungseinrichtung ausgeschaltet und ein Überfüllen vermieden.

Desweiteren kann auch ein automatisches Wiederanstellen der Antriebe, wie oben in Bezug auf den Überwachungsbereich zwischen Grundmaschine und Zuführungsvorrichtung beschrieben, vorgesehen sein.

Im nachfolgenden wird die Erfindung beispielsweise anhand des in der Zeichnung dargestellten Ausführungsbeispiels verdeutlicht. Es zeigen:
- Fig. 1: eine Seitenansicht einer Trennmaschine mit vorgeschalteter vorbereitender Maschine,
- Fig. 2: eine vergrößerte Ansicht des Innern der in Fig. 1 dargestellten Maschine und
- Fig. 3: eine vergrößerte Ansicht des Übergabebereichs zwischen vorbereitender Maschine und Zuführungsvorrichtung.

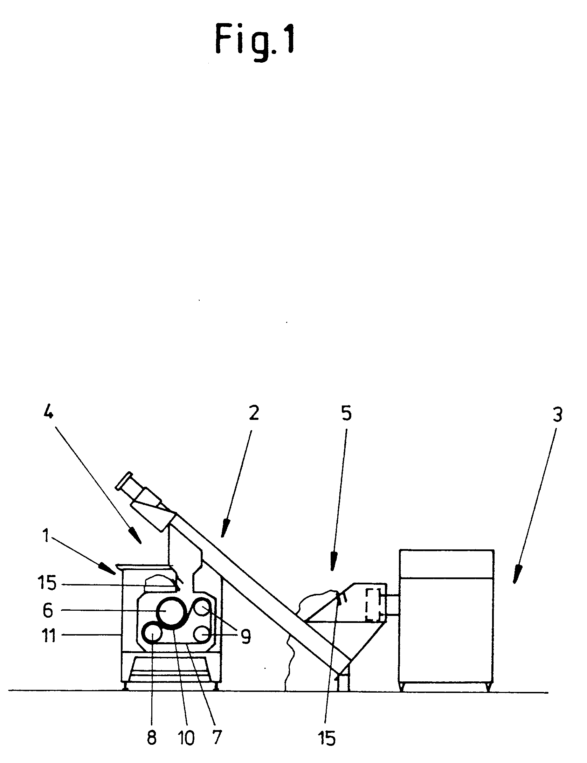

Wie aus Fig. 1 hervorgeht, besteht die Trennmaschine im wesentlichen aus einer Grundmaschine 1, in der Produkte weicher Konsistenz, hier Fleisch, von Produkten härterer Konsistenz, hier Sehnen und Knorpel, getrennt werden, einer Zuführungsvorrichtung 2, die eine Förderschnecke aufweist, und einem Fleischwolf als vorbereitender Maschine 3, in der das Fleisch vorzerkleinert wird.

Zwischen der Zuführungsvorrichtung 2 und der Grundma-schine 1 und der vorbereitenden Maschine 3 und der Zuführungsvorrichtung 2 ist jeweils ein Übergabebereich 4 bzw. 5 angeordnet. Die Grundmaschine 1 und die Übergabebereiche 4 und 5 sind in Fig. 1 zum Betrachter hin offen dargestellt.

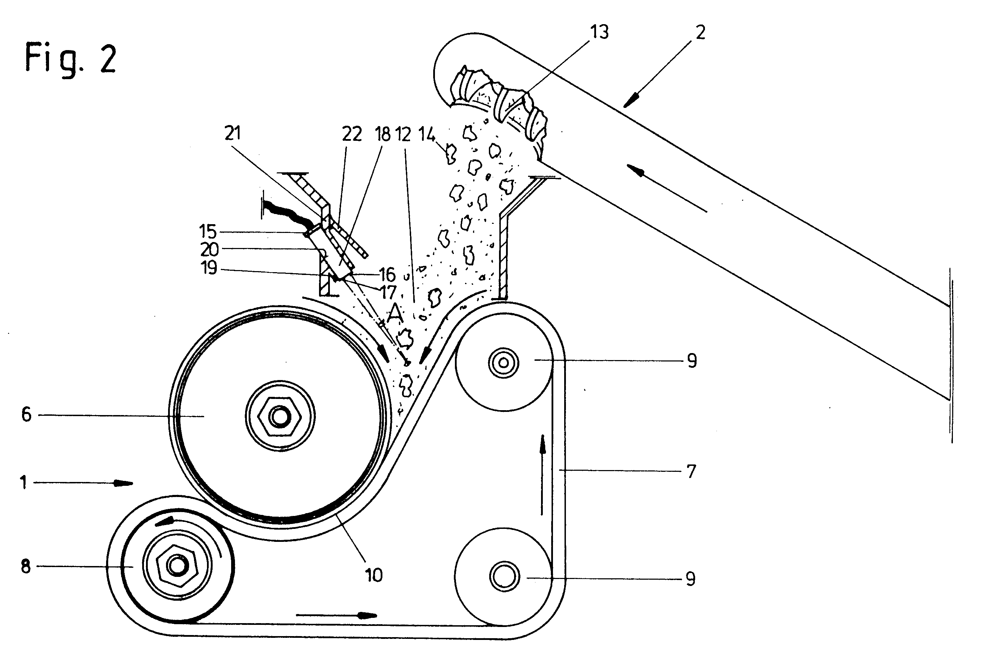

Die an sich bekannte Grundmaschine 1 besteht, wie in Fig. 1 angedeutet und in Fig. 2 näher dargestellt, im wesentlichen aus einer Trommel 6 und einer elastischen Schicht 7 in Form eines endlosen Gummibandes, das über eine Preßrolle 8 und zwei Umlenkrollen 9 geführt ist und in einem Bereich 10 an der Trommel 6 unter Druck anliegt. Die Trommel 6, die Preßrolle 8 und die Umlenkrollen 9 sind drehbar zwischen zwei Seitenwänden 11, von denen nur die hintere in Fig. 1 dargestellt ist, angebracht. Die Trommel 6 und die Preßrolle 8 werden mit gleicher Umfangsgeschwindigkeit in entgegengesetzter Drehrichtung durch einen hinter der Seitenwand 11 angeordneten Antrieb angetrieben.

Wie in Fig. 2 genauer gezeigt ist, bilden die Trommel 6 und die elastische Schicht 7 an der der Bewegungsrichtung entgegengesetzten Seite einen im Schnitt annähernd dreiecksförmigen Zwischenraum 12, in den die durch die Förderschnecke 13 der Zuführungsvorrichtung 2 beförderten Fleischstücke 14 gelangen.

In den Zwischenraum 12 hinein ist eine Sender-Empfänger-Vorrichtung 15 gerichtet. Die Sender-Empfänger-Vorrichtung 15 weist eine GaAs-Diode als Sender und eine Si-Photodiode als Empfänger auf. Die GaAs-Diode emittiert moduliertes Infrarotlicht. Die Meßstrahlen der beiden Dioden sind so ausgerichtet, daß die Si-Photodiode nur das innerhalb eines bestimmten Meßabstands A vor der Sender-Empfänger-Vorrichtung reflektierte Infrarotlicht registriert. Der Meßabstand A reicht tief in den Zwischenraum, z.B. etwa bis zur Mitte des Zwischenraums 12 hinein, um dort eventuell vorhandene Fleischstücke 14 nachzuweisen und Fremdreflektionen an der Trommel 6 und am Band 7 auszuschließen.

Die GaAs-Diode 16 und die Si-Photodiode 17 sind über eine in der Zeichnung nicht dargestellte Steuervorrichtung mit dem Antrieb der Trommel 6 und dem Antrieb der Zuführungsvorrichtung 2 zusammengeschaltet. Die Steuervorrichtung umfaßt eine Verstärker- und Auswertungsstufe mit abfalls- und anzugsverzögerten Zeltrelais, die Signale an die Antriebsmotoren abgeben. Die Abfalls-bzw. Anzugsverzögerung der Zeitrelais beträgt im vorliegenden Fall der Entsehnung vorzerkleinerter Fleischstücke 14 etwa 10 sec. und sorgt in bekannter Weise dafür, daß der Antriebsmotor der Trommel 6 ausgestellt wird, wenn die Si-Photodiode 17 innerhalb dieser Zeit kein Signal empfangen hat, und daß der Antriebsmotor der Zuführungsvorrichtung 2 ausgestellt wird, wenn die Si-Photodiode während dieser Zeit durchgehend Signale empfangen hat.

In einer Erweiterung der hier betrachteten einfachsten Ausführungsform der Steuervorrichtung kann der Antriebsmotor der Trommel 6 wieder angestellt werden, sobald die Si-Photodiode ein Signal empfangen hat, und der Antriebsmotor der Zuführungsvorrichtung 2 wieder angestellt werden, wenn die Si-Photodiode nach einer vorgegebenen Zeit kein Signal empfangen hat.

Darüber hinaus kann die Steuervorrichtung einen elektrischen Drehzahlversteller oder eine mechanische Verstelleinrichtung aufweisen, mit denen der Antriebsmotor der Trommel 6 und der Antriebsmotor der Zuführungsvorrichtung 2 in Abhängigkeit von der Frequenz der von der Si-Photodiode registrierten Signale in bekannter Weise stetig regelbar sind.

Die GaAs-Diode und die Si-Photodiode sind gemeinsam in einem zylindrischen Gehäuse 18 angeordnet. Als eine derartige Meßeinheit sind sie im Handel erhältlich.

Die Sender-Empfänger-Vorrichtung 15 ist in eine zylindrische Hülse 19 eingesetzt, die durch eine über der Trommel 6 angeordnete Öffnung 20 in der Wand 21 des Übergabebereiches zwischen der Zuführungsvorrichtung 2 und dem Zwischenraum 12 greift. Die Hülse 19 ist in ihrem äußeren Randbereich in der Öffnung 20 der Wand 21 festgeschweißt. Entsprechend der Konstruktion der Grundmaschine 1 ist die zylindrische Hülse 19 gegen die Horizontale nach unten geneigt, so daß die Sender-Empfänger-Vorrichtung 15 in den zu überwachenden Bereich hineingerichtet ist.

Über der Hülse 19 ist eine über diese reichende und stärker nach unten geneigte Abweiserplatte 22 angeordnet. Die Abweiserplatte 22 ist mit ihrem nach außen weisenden Ende an der Wand 21 festgeschweißt.

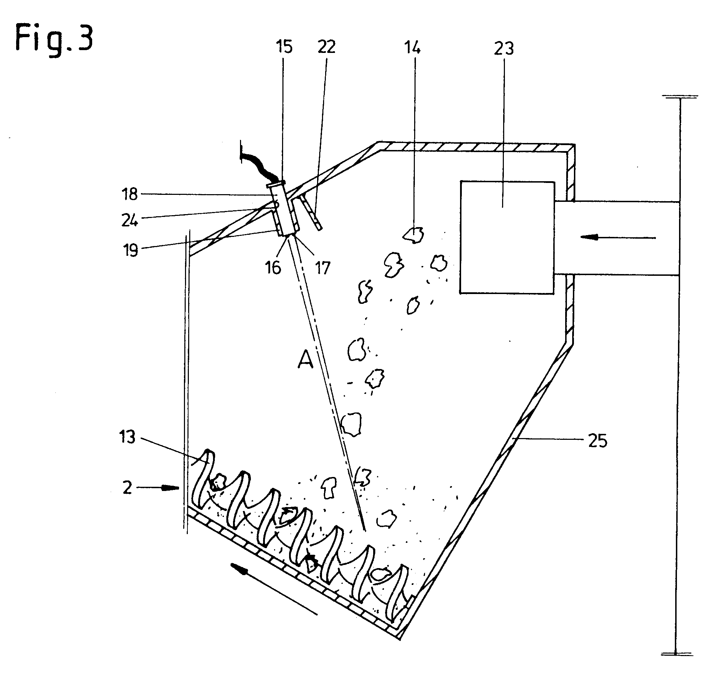

Wie aus Fig. 1 und genauer aus Fig. 3 hervorgeht, ist zur Überwachung des Übergabebereichs 5 zwischen der vorbereitenden Maschine 3 und der Zuführungsvorrichtung 2 ebenfalls eine Sender-Empfänger-Vorrichtung 15 angeordnet. Die in diesem Bereich verwendete Sender-Empfänger-Vorrichtung 15 ist von gleicher Bauart wie die oben beschriebene Sender-Empfänger-Vorrichtung.

Die in einem zylindrischen Gehäuse 18 angeordnete GaAs-Diode und Si-Photodiode sind so angeordnet, daß der Meßstrahl die aus dem Austrittsstutzen 23 des Fleischwolfs in die Förderschnecke 13 fallenden Fleischstücke 14 registriert. Der Meßabstand A reicht etwa bis in die Mitte des Fallbereichs der Fleischstücke 14.

Die Sender-Empfänger-Vorrichtung 15 ist von außen in eine Hülse 19 eingesetzt, die in einer Öffnung 24 in der Wand 25 des Übergabebereichs festgeschweißt ist. Über der Hülse 19 ist eine über diese reichende Abweiserplatte 22 angeordnet, die an ihrem nach außen weisenden Ende an der Wand 25 festgeschweißt ist.

Die In Fig. 3 gezeigte Sender-Empfänger-Vorrichtung 15 ist über eine in der Zeichnung nicht dargestellte Steuervorrichtung mit dem Antrieb des Fleischwolfs und dem Antrieb der Zuführungsvorrichtung 2 zusammengeschaltet. Die Schaltung entspricht der oben im Zusammenhang mit der Steuervorrichtung für den Antrieb der Trommel 6 und dem Antrieb der Zuführungsvorrichtung 2 beschriebenen Funktion. Mit Hilfe von abfallsverzögerten bzw. anzugsverzögerten Zeitrelais wird in an sich bekannter Weise dafür gesorgt, daß der Antriebsmotor des Fleischwolfs ausgestellt wird, wenn die Si-Photodiode während einer vorgegebenen Zeit durchgehend Signale empfangen hat, und daß der Antriebsmotor der Zuführungsvorrichtung 2 ausgestellt wird, wenn die Si-Photodiode 17 innerhalb einer vorgegebenen Zeit kein Signal empfangen hat.

Die Steuervorrichtung kann ebenfalls wie oben ein automatisches Wiederanstellen der Antriebsmotoren bewirken.

## Patentansprüche

1. Trennmaschine zur Trennung von Produkten weicher und härterer Konsistenz, mit einer zylinderförmigen Trommel, die in ihrer Umfangswand Öffnungen zum Hindurchtreten des oder der Produkte weicher Konsistenz aufweist und die um ihre Achse über eine Steuervorrichtung drehbar antreibbar ist, mit einer seitlich und/oder unterhalb der Trommel angeordneten und unter Druck gegen die Trommel anliegenden elastischen Schicht, die simultan und in dem Bereich, in dem die Schicht an der Trommel anliegt, in gleicher Richtung mit dieser bewegbar ist und die mit der Trommel an der der Bewegungsrichtung entgegengesetzten Seite einen im Schnitt annähernd dreiecksförmigen Zwischenraum bildet, und mit einer Zuführungsvorrichtung zur Zuführung der Produkte in den Zwischenraum, **gekennzeichnet durch** eine Sender-Empfänger-Vorrichtung (15), wobei durch den Sender elektromagnetische oder akkustische Signale emittierbar und durch den Empfänger entweder unreflektierte Signale oder innerhalb eines bestimmten Meßabstands (A) vom Sender reflektierte Signale registrierbar sind, der Sender und Empfänger außerhalb des Bereichs angeordnet sind, der den Zwischenraum (12) zwischen Trommel (6) und elastischer Schicht (7) und den Raum umfaßt, durch den die Produkte von der Zuführungsvorrichtung (2) dem Zwischenraum (12) zuführbar sind, und der Sender und Empfänger auf diesen Bereich gerichtet sind, und die Sender-Empfänger-Vorrichtung (15) über die Steuervorrichtung mit dem Antrieb der Trommel (6) und dem Antrieb der Zuführungsvorrichtung (2) zusammengeschaltet ist, wobei in dem Fall, daß der Empfänger unreflektierte Signale registriert, durch die Schaltung der Antrieb der Trommel (6) ausstellbar ist, wenn der Empfänger während einer vorgegebenen Zeit durchgehend Signale empfangen hat, und der Antrieb der Zuführungsvorrichtung (2) ausstellbar ist, wenn der Empfänger nach einer vorgegebenen Zeit kein Signal empfangen hat und wobei in dem Fall, daß der Empfänger reflektierte Signale registriert, durch die Schaltung der Antrieb der Trommel (6) ausstellbar ist, wenn der Empfänger nach einer vorgegebenen Zeit kein Signal empfangen hat, und der Antrieb der Zuführungsvorrichtung (2) ausstellbar ist, wenn der Empfänger während einer vorgegebenen Zeit durchgehend Signale empfangen hat.

2. Trennmaschine nach Anspruch 1, **dadurch gekennzeichnet**, daß in dem Fall, daß der Empfänger unreflektierte Signale registriert, durch die Schaltung der Antrieb der Trommel (6) wieder anstellbar ist, wenn der Empfänger nach einer vorgegebenen Zeit kein Signal empfangen hat, und der Antrieb der Zuführungsvorrichtung (2) wieder anstellbar ist, wenn der Empfänger während einer vorgegebenen Zeit durchgehend Signale empfangen hat, und daß in dem Fall, daß der Empfänger reflektierte Signale registriert, durch die Schaltung der Antrieb der Trommel (6) wieder anstellbar ist, sobald der Empfänger ein Signal empfangen hat, und der Antrieb der Zuführungsvorrichtung (2) wieder anstellbar ist, wenn der Empfänger nach einer vorgegebenen Zeit kein Signal empfangen hat.

3. Trennmaschine nach Anspruch 1 oder 2, wobei der Empfänger in einem vorbestimmten Meßabstand (A) vom Sender reflektierte Signale registriert, **dadurch gekennzeichnet**, daß der Sender und Empfänger in den Zwischenraum (12) zwischen Trommel (6) und elastischer Schicht (7) gerichtet sind und der vorbestimmte Meßabstand (A) etwa bis zur Mitte des Zwischenraums (12) reicht.

4. Trennmaschine nach einem der Ansprüche 1 bis 3, **dadurch gekennzeichnet**, daß die Steuervorrichtung zur Ein-Aus-Schaltung der Antriebe abfallsverzögerte bzw. anzugsverzögerte Zeitrelais aufweist.

5. Trennmaschine nach einem der Ansprüche 1 bis 4, **dadurch gekennzeichnet**, daß mit der Steuervorrichtung der Antrieb der Trommel (6) und/oder der Antrieb der Zuführungsvorrichtung (2) in Abhängigkeit von der Frequenz der vom Empfänger registrierten Signale über einen elektrischen Drehzahlversteller oder eine mechanische Verstelleinrichtung stetig regelbar sind.

6. Trennmaschine nach einem der Ansprüche 1 bis 5, **dadurch gekennzeichnet**, daß die Sender-Empfänger-Vorrichtung (15) einen Infrarot-Sender und -Empfänger aufweist.

7. Trennmaschine nach Anspruch 6, **dadurch gekennzeichnet**, daß das vom Sender emittierte Infrarot-Licht moduliert ist.

8. Trennmaschine nach Anspruch 6 oder 7, **dadurch gekennzeichnet**, daß die Sender-Empfänger-Vorrichtung (15) als Sender eine GaAs-Diode (16) und als Empfänger eine Si-Photodiode (17) aufweist.

9. Trennmaschine nach Anspruch 8, wobei der Empfänger in einem vorbestimmten Meßabstand (A) vom Sender reflektierte Signale registriert, **dadurch gekennzeichnet**, daß die GaAs-Diode (16) und die Si-Photodiode (17) gemeinsam in einem zylindrischen Gehäuse (18) angeordnet und die geometrischen Strahlengänge der beiden Dioden (16, 17) sich in dem vorbestimmten Meßabstand (A) von der GaAs-Diode (16) schneiden.

10. Trennmaschine nach Anspruch 9, **dadurch gekennzeichnet**, daß die Sender-Empfänger-Vorrichtung in eine zylindrische Hülse (19) eingesetzt ist, die von außen in den Raum reicht, durch den die Produkte von der Zuführungsvorrichtung (2) dem Zwischenraum (12) zwischen Trommel (6) und elastischer Schicht (7) zuführbar sind, und daß die zylindrische Hülse (19) gegen die Horizontale nach unten geneigt ist.

11. Trennmaschine nach Anspruch 10, **dadurch gekennzeichnet**, daß über der Hülse (19) eine über diese reichende Abweiserplatte (22) angeordnet ist.

12. Trennmaschine nach einem der Ansprüche 1 bis 11, wobei der Zuführungsvorrichtung (2) eine vorbereitende Maschine (3) vorgeschaltet ist und zwischen vorbereitender Maschine (3) und Zuführungsvorrichtung (2) ein Übergabebereich (5) für die vorbereiteten Produkte angeordnet ist, **gekennzeichnet durch** eine Sender-Empfänger-Vorrichtung (15) und eine Steuervorrichtung nach einem der Ansprüche 1 bis 11, wobei der Sender und Empfänger außerhalb des Übergabebereichs (5) angeordnet und auf diesen gerichtet sind und wobei in dem Fall, daß der Empfänger unreflektierte Signale registriert, durch die Steuervorrichtung der Antrieb der Zuführungsvorrichtung (2) ausstellbar ist, wenn der Empfänger während einer vorgegebenen Zeit durchgehend Signale empfangen hat, und der Antrieb der vorbereitenden Maschine (3) ausstellbar ist, wenn der Empfänger nach einer vorgegebenen Zeit kein Signal empfangen hat, und in dem Fall, daß der Empfänger reflektierte Signale registriert, durch die Steuervorrichtung der Antrieb der Zuführungsvorrichtung (2) ausstellbar ist, wenn der Empfänger nach einer vorgegebenen Zeit kein Signal empfangen hat, und der Antrieb der vorbereitenden Maschine (3) ausstellbar ist, wenn der Empfänger während einer vorgegebenen Zeit durchgehend Signale empfangen hat.

## Claims

1. Separating apparatus for the separation of products of soft and hard consistencies, comprising a cylindrical drum which is provided, in its peripheral wall, with apertures for the product or products of soft consistency to pass through and which can be driven, by means of a control device, in a rotatable manner about its axis, and which comprises a resilient layer which is disposed laterally of and/or below the drum and which abuts the drum under pressure, which layer is moveable in the same direction as the drum, simultaneously and in the area in which it abuts the drum, and which forms, together with the drum, on the side opposite to the direction of movement, a space which is virtually triangular in section, and comprising a supply device for supplying the products into the space, characterised by a transceiver device (15), wherein electromagnetic or acoustic signals can be transmitted by the transmitter and signals that either are not reflected or are reflected by the transmitter within a predetermined measuring distance (A) can be registered by the receiver, the transmitter and the receiver being disposed outside the area which surrounds the space (12) between the drum (6) and the resilient layer (7) and the chamber through which the products can be supplied to the space (12) from the supply device (2), the transmitter and the receiver being directed towards this area, and the transceiver device (15) being connected to the drive of the drum (6) and the drive of the supply device (2) via the control device, wherein, in the case that the receiver registers signals that are not reflected, the drive of the drum (6) can be switched off by means of the circuit if the receiver has received signals continuously throughout a predetermined time, and the drive of the supply device (2) can be switched off if the receiver has not received a signal after a predetermined time and wherein, in the case that the receiver registers reflected signals, the drive of the drum (6) can be switched off by means of the circuit if the receiver has not received a signal after a predetermined time, and the drive of the supply device (2) can be switched off if the receiver has received signals continuously throughout a predetermined time.

2. Separating apparatus according to Claim 1, characterised in that in the case that the receiver registers signals that are not reflected, the drive of the drum (6) can be switched back on by means of the circuit if the receiver has not received a signal after a predetermined time, and the drive (2) can be switched back on if the receiver has received signals continuously throughout a predetermined time, and in that in the case that the receiver registers reflected signals, the drive of the drum (6) can be switched back on as soon as the receiver has received a signal, and the drive of the supply device (2) can be switched back on if the receiver has not received a signal after a predetermined time.

3. Separating apparatus according to Claim 1 or Claim 2, wherein the receiver registers, within a predetermined measuring distance (A), signals reflected by the transmitter, characterised in that the transmitter and the receiver are directed into the space (12) between the drum (6) and the resilient layer (7) and the predetermined measuring distance (A) extends approximately to the middle of the space (12).

4. Separating apparatus according to any one of Claims 1 to 3, characterised in that the control device comprises a delayed drop out or delayed-pull time-lag relay for switching the drives on and off.

5. Separating device according to one of Claims 1 to 4 characterised in that, by means of the control device, the drive of the drum (6) and/or the drive of the supply device (2) can be constantly regulated, via an electric rotational speed adjuster or a mechanical adjustment device, in dependence on the frequency of the signals registered by the receiver.

6. Separating apparatus according to any one of Claims 1 to 5, characterised in that the transceiver device (15) comprises an infra-red transmitter and receiver.

7. Separating apparatus according to Claim 6, characterised in that the infra-red light transmitted by the transmitter is modulated.

8. Separating device according to Claim 6 or Claim 7, characterised in that the transceiver device (15) comprises a GaAs-diode (16) as a transmitter and an Si-photodiode (17) as a receiver.

9. Separating apparatus according to Claim 8, wherein the receiver registers, within a predetermined measuring distance (A), signals reflected by the transmitter, characterized in that the GaAs-diode (16) and the Si-photodiode (17) are arranged together in a cylindrical casing (18) and the geometric ray length of the two diodes (16,17) intersect with one another in the predetermined measuring distance (A) of the GaAs-diode (16).

10. Separating apparatus according to Claim 9, characterized in that the transceiver device is inserted in a cylindrical sleeve (19), which extends from the exterior into the chamber through which the products can be fed from the supply device (2) to the space (12) between the drum and the resilient layer (7), and in that the cylindrical sleeve (19) is inclined downwards in relation to the horizontal.

11. Separating apparatus according to Claim 10, characterized in that a deflector plate (22) extending over the sleeve (19) is disposed above the latter.

12. Separating apparatus according to one of Claims 1 to 11, wherein a preparing apparatus (3) is connected upstream of the supply device (2) and a transfer area (5) for the prepared products is disposed between the preparing apparatus (3) and the supply device (2), characterized by a transceiver device (15) and a control device according to any one of claims 1 to 11, wherein the transmitter and the receiver are disposed externally of the transfer area (5) and directed onto this latter and wherein, in the case that the receiver registers signals that are not reflected, the drive of the supply device (2) can be switched off by means of the control device if the receiver has received signals continuously throughout a predetermined time, and the drive of the preparing apparatus (3) can be switched off if the receiver has not received a signal after a predetermined time, and in the case of the receiver registering reflected signals, the drive of the supply device (2) can be switched off by means of the control device if the receiver has not received a signal after a predetermined time, and the drive of the preparing apparatus (3) can be switched off if the receiver has received signals continuously throughout a predetermined time.

## Revendications

1. Machine séparatrice pour la séparation de produits ayant respectivement une consistance molle et une consistance dure, comportant un tambour cylindrique qui présente, dans sa paroi périphérique, des ouvertures pour le passage du ou des produits de consistance molle et qui peut être entraîné en rotation autour de son axe au moyen d'un dispositif de commande, une couche élastique, qui est disposée latéralement par rapport au tambour et/ou au-dessous de celui-ci, est pressée contre ledit tambour, est mobile en même temps que lui et dans le même sens que lui dans la région où elle est appliquée contre le tambour, et forme avec ce dernier, du côté opposé au sens de mouvement, un espace intermédiaire approximativement triangulaire en coupe, ainsi qu'un dispositif d'alimentation pour l'introduction des produits dans cet espace intermédiaire, caractérisée par un dispositif émetteur-récepteur (15), grâce auquel des signaux électromagnétiques ou acoustiques peuvent être émis par l'émetteur et soit des signaux non réfléchis, soit des signaux réfléchis dans un intervalle déterminé de mesure (A) à partir de l'émetteur peuvent être enregistrés par le récepteur, l'émetteur et le récepteur étant disposés en dehors de la région qui englobe l'espace intermédiaire (12) entre le tambour (6) et la couche élastique (7) et l'espace à travers lequel les produits peuvent être introduits dans l'espace intermédiaire (12) par le dispositif d'alimentation (2), et l'émetteur et le récepteur étant dirigés vers cette région, et en ce que le dispositif émetteur-récepteur (15) est relié, par l'intermédiaire du dispositif de commande, au mécanisme d'entraînement du tambour (6) et au mécanisme d'entraînement du dispositif d'alimentation (2), de telle sorte que, dans le cas où le récepteur enregistre des signaux non réfléchis, le mécanisme d'entraînement du tambour (6) puisse être mis au repos par commutation lorsque le récepteur a reçu des signaux en permanence pendant un temps prédéfini, et que le mécanisme d'entraînement du dispositif d'alimentation (2) puisse être mis au repos lorsque le récepteur n'a pas reçu de signal au bout d'un temps prédéfini, et de telle sorte que, dans le cas où le récepteur enregistre des signaux réfléchis, le mécanisme d'entraînement du tambour (6) puisse être mis au repos par commutation lorsque le récepteur n'a pas reçu de signal au bout d'un temps prédéfini, et que le mécanisme d'entraînement du dispositif d'alimentation (2) puisse être mis au repos lorsque le récepteur a reçu des signaux en permanence pendant un temps prédéfini.

2. Machine séparatrice selon la revendication 1, caractérisée en ce que, dans le cas où le récepteur enregistre des signaux non réfléchis, le mécanisme d'entraînement du tambour (6) peut être remis en marche par commutation lorsque le récepteur n'a pas reçu de signal au bout d'un temps prédéfini, et le mécanisme d'entraînement du dispositif d'alimentation (2) peut être remis en marche lorsque le récepteur a reçu des signaux en permanence pendant un temps prédéfini, et en ce que, dans le cas où le récepteur enregistre des signaux réfléchis, le mécanisme d'entraînement du tambour (6) peut être remis en marche par commutation aussitôt que le récepteur a reçu un signal, et le mécanisme d'entraînement du dispositif d'alimentation (2) peut être remis en marche lorsque le récepteur n'a pas reçu de signal au bout d'un temps prédéfini.

3. Machine séparatrice selon la revendication 1 ou 2, dans laquelle le récepteur enregistre des signaux réfléchis dans un intervalle de mesure prédéterminé (A) à partir de l'émetteur, caractérisée en ce que l'émetteur et le récepteur sont dirigés vers l'espace intermédiaire (12) entre le tambour (6) et la couche élastique (7), et l'intervalle de mesure prédéterminé (A) s'étend à peu prés jusqu'au milieu de l'espace intermédiaire (12).

4. Machine séparatrice selon l'une quelconque des revendications 1 à 3, caractérisée en ce que le dispositif de commande comporte, pour la commutation marche/repos des mécanismes d'entraînement, des relais temporisés à retombée retardée ou à armement retardé.

5. Machine séparatrice selon l'une quelconque des revendications 1 à 4, caractérisée en ce que le mécanisme d'entraînement du tambour (6) et/ou le mécanisme d'entraînement du dispositif d'alimentation (2) sont réglables en continu par le dispositif de commande, en fonction de la fréquence des signaux enregistrés par le récepteur, par l'intermédiaire d'un régulateur électrique de vitesse de rotation ou d'un système de réglage mécanique.

6. Machine séparatrice selon l'une quelconque des revendications 1 à 5, caractérisée en ce que le dispositif émetteur-récepteur (15) comporte un émetteur et un récepteur d'infrarouge.

7. Machine séparatrice selon la revendication 6, caractérisée en ce que la lumière infrarouge émise par l'émetteur est modulée.

8. Machine séparatrice selon la revendication 6 ou 7, caractérisée en ce que le dispositif émetteur-récepteur (15) comporte, en tant qu'émetteur, une diode à l'arséniure de gallium (16) et, en tant que récepteur, une photodiode au silicium (17).

9. Machine séparatrice selon la revendication 8, dans laquelle le récepteur enregistre des signaux réfléchis dans un intervalle de mesure prédéterminé (A) à partir de l'émetteur, caractérisée en ce que la diode à l'arséniure de gallium (16) et la photodiode au silicium (17) sont montées ensemble dans un boîtier cylindrique (18) et en ce que les trajets géométriques des rayons des deux diodes (16, 17) se coupent à la distance de mesure prédéterminée (A) à partir de la diode à l'arséniure de gallium (16).

10. Machine séparatrice selon la revendication 9, caractérisée en ce que le dispositif émetteur-récepteur est inséré dans une douille cylindrique (19) qui pénètre de l'extérieur dans l'espace à travers lequel les produits peuvent être introduits, par le dispositif d'alimentation (2), dans l'espace intermédiaire (12) entre le tambour (6) et la couche élastique (7), et en ce que la douille cylindrique (19) est inclinée vers le bas par rapport à l'horizontale.

11. Machine séparatrice selon la revendication 10, caractérisée en ce qu'une plaque déflectrice (22) est disposée au-dessus de la douille (19) et s'étend le long de celle-ci.

12. Machine séparatrice selon l'une quelconque des revendications 1 à 11, dans laquelle une machine de préparation (3) est disposée en amont du dispositif d'alimentation (2) et une région de transfert (5) pour les produits préparés est interposée entre la machine de préparation (3) et le dispositif d'alimentation (2), caractérisée par un dispositif émetteur-récepteur (15) et un dispositif de commande selon l'une quelconque des revendications 1 à 11, l'émetteur et le récepteur étant disposés en dehors de la région de transfert (5) et étant dirigés vers celle-ci, et en ce que, dans le cas où le récepteur enregistre des signaux non réfléchis, le mécanisme d'entraînement du dispositif d'alimentation (2) peut être mis au repos par le dispositif de commande lorsque le récepteur a reçu des signaux en permanence pendant un temps prédéfini, et le mécanisme d'entraînement de la machine de préparation (3) peut être mis au repos lorsque le récepteur n'a pas reçu de signal au bout d'un temps prédéfini, et en ce que, dans le cas où le récepteur enregistre des signaux réfléchis, le mécanisme d'entraînement du dispositif d'alimentation (2) peut être mis au repos par le dispositif de commande lorsque le récepteur n'a pas reçu de signal au bout d'un temps prédéfini, et le mécanisme d'entraînement de la machine de préparation (3) peut être mis au repos lorsque le récepteur a reçu des signaux en permanence pendant un temps prédéfini.
